# FASCICULE DE BREVET EUROPEEN

(11) **EP 1 414 668 B1**
(45) Date de publication et mention de la délivrance du brevet: **08.03.2006**
(21) Numéro de dépôt: 02794604.5
(22) Date de dépôt: 11.07.2002
(51) Int. Cl.: B60N 2/06

(54) **BANQUETTE A ASSISE MODULABLE, POUR VEHICULE**
VERSTELLBARE FAHRZEUGSITZBANK
ADJUSTABLE VEHICLE BENCH SEAT

(30) Priorité: 06.08.2001 FR 0110501
(43) Date de publication de la demande: 06.05.2004
(73) Titulaire: Renault s.a.s., 92100 Boulogne Billancourt (FR)
(72) Inventeur: LEGRAND, Jean-Pierre, F-28300 Bercheres Saint Germain (FR)
(86) Numéro de dépôt international: PCT/FR2002/002438
(87) Numéro de publication internationale: WO 2003/013900

(56) Documents cités:
- EP-A- 0 943 483
- EP-A- 1 060 944
- FR-A- 2 775 637

## Description

### Domaine technique

L'invention concerne une banquette de véhicule, dont l'assise présente une géométrie modulable selon le nombre de personnes occupant ladite banquette. Plus précisément, l'assise de la banquette selon l'invention est conçue pour pouvoir occuper deux états distincts, selon qu'une personne doit ou non être assise dans sa partie centrale.

La banquette selon l'invention peut être utilisée dans tout type de véhicule et notamment comme banquette arrière dans un véhicule automobile.

### Etat de la technique

Les sièges et banquettes qui équipent les véhicules, notamment les véhicules automobiles, présentent de plus en plus souvent des caractéristiques de modularité. Ces caractéristiques visent à permettre une adaptation aussi complète que possible des véhicules aux besoins très divers des utilisateurs.

Il existe notamment un besoin croissant pour disposer de sièges et de banquettes dont la configuration puisse être adaptée à la demande en fonction du nombre de passagers que l'on désire transporter. De plus, il apparaît souhaitable que cette adaptation puisse être faite facilement et en un temps très court.

Dans cet esprit, le document EP-A-0 943 483 propose de monter un siège central escamotable entre deux sièges placés côte à côte. Lorsque le siège central est escamoté, son assise se trouve à un niveau inférieur à celui des sièges adjacents et son dossier peut former à volonté entre lesdits sièges un accoudoir ou une tablette centrale.

Cet agencement a pour inconvénients majeurs d'être complexe et coûteux.

Par ailleurs, le document FR-A- 2 775 637 propose un dispositif permettant de modifier la position relative de trois sièges arrière juxtaposés d'un véhicule de type "monospace". Plus précisément, une commande unique permet de déplacer simultanément en sens inverse, selon l'axe longitudinal du véhicule, le siège central et les deux sièges latéraux, de façon à placer le siège central devant, derrière ou sur la même ligne que les sièges latéraux. De plus, la commande est telle que les sièges latéraux se rapprochent l'un de l'autre lorsqu'ils sont décalés vers l'avant ou vers l'arrière du siège central. Dans ce dernier cas, cela permet notamment aux passagers arrière de disposer d'un espace latéral suffisant malgré la présence des renflements de passage des roues arrière. Le dossier du siège central peut alors être escamoté.

Cependant, il n'existe pas à ce jour de dispositif simple et peu coûteux permettant d'adapter l'assise d'une banquette de véhicule à la largeur disponible à l'intérieur de l'habitacle, selon que la banquette est avancée ou reculée, pour exploiter au mieux l'espace disponible, notamment en présence de renflements de passage de roues arrière, en fonction du nombre des passagers.

Le préambule de la revendication 1 est fondé sur le document EP-A-1 060 944, qui décrit une banquette arrière de véhicule formée de deux sièges aptes à coulisser sur deux poutres transversales solidaires d'une poutre longitudinale apte à se déplacer vers l'avant ou vers l'arrière. En position avancée, les sièges sont situés devant les passages de roues et peuvent être écartés. Un élément de siège supplémentaire ou un siège d'enfant peut alors être placé entre les deux sièges.

### Exposé de l'invention

L'invention a précisément pour objet une banquette de véhicule, dont la conception originale, lui permet de changer rapidement et facilement de configuration, notamment afin de pouvoir déplacer la banquette vers l'arrière ou vers l'avant en prenant en compte la limitation de largeur engendrée par les passages de roues du véhicule.

Conformément à l'invention, ce résultat est obtenu au moyen d'une banquette de véhicule conforme à la revendication 1.

Dans un mode de réalisation préféré de l'invention, la banquette est une banquette arrière de véhicule.

Dans ce cas, les moyens de commande comprennent de préférence un premier organe de manoeuvre placé dans l'habitacle du véhicule et un deuxième organe de manoeuvre placé dans le coffre arrière du véhicule.

Généralement, la banquette est munie de moyens aptes à commander son déplacement global entre une position avant et une position arrière dans le véhicule. La position avant de la banquette est alors telle que la région arrière de l'assise est située en avant de renflements de passage de roues du véhicule, de telle sorte que l'assise peut occuper la configuration "trois places". A l'inverse, la position arrière de l'assise est telle que la région arrière de l'assise est située en face desdits renflements, de telle sorte que l'assise ne peut occuper que la configuration "deux places".

Ainsi, il est possible de disposer d'une banquette "trois places" lorsque toute l'assise se trouve en avant des renflements de passage des roues et d'une banquette "deux places" lorsque la partie arrière de l'assise se trouve en face de ces renflements.

Cet agencement particulièrement simple permet de faire passer l'assise du siège de sa configuration "trois places", dans laquelle les deux parties arrière sont écartées l'une de l'autre et la partie centrale placée entre ces deux parties arrière, dans sa configuration "deux places", dans laquelle la partie centrale est décalée vers l'avant et les deux parties arrière rapprochées l'une de l'autre, et inversement.

Avantageusement, les moyens de commande sont de nature mécanique.

Dans ce cas, les moyens de commande peuvent notamment comprendre un palonnier articulé sur l'ossature de l'assise, de façon à agir simultanément sur chacune des deux parties arrière de celle-ci, et au moins une biellette reliant le palonnier à la partie centrale de l'assise. Ce mécanisme particulièrement simple peut toutefois être remplacé par tout autre système techniquement équivalent, tel qu'un système vis écrou ou une commande électrique.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue en perspective qui représente une banquette de véhicule conforme à l'invention, dans sa configuration trois places" ;
- la figure 2 est une vue comparable à la figure 1, qui représente la banquette selon l'invention dans une configuration intermédiaire ;
- la figure 3 est une vue en perspective comparable aux figures 1 et 2, qui représente la banquette selon l'invention dans sa configuration "deux places" ;
- la figure 4 est une vue de dessus des moyens de commande assurant le déplacement des parties mobiles de l'assise du siège des figures 1 à 3, dans leur configuration "trois places" et selon un mode de réalisation préféré de l'invention ; et
- les figures 5A à 5C sont des vues schématiques des moyens de commande de la figure 4, illustrant le passage progressif dans la configuration "deux places".

### Description détaillée d'un mode de réalisation préféré de l'invention

Dans l'ensemble du texte, les termes tels que "avant", "arrière", "gauche", "droite", "latéral", "transversal", "longitudinal", etc. se réfèrent au véhicule dans lequel la banquette est montée.

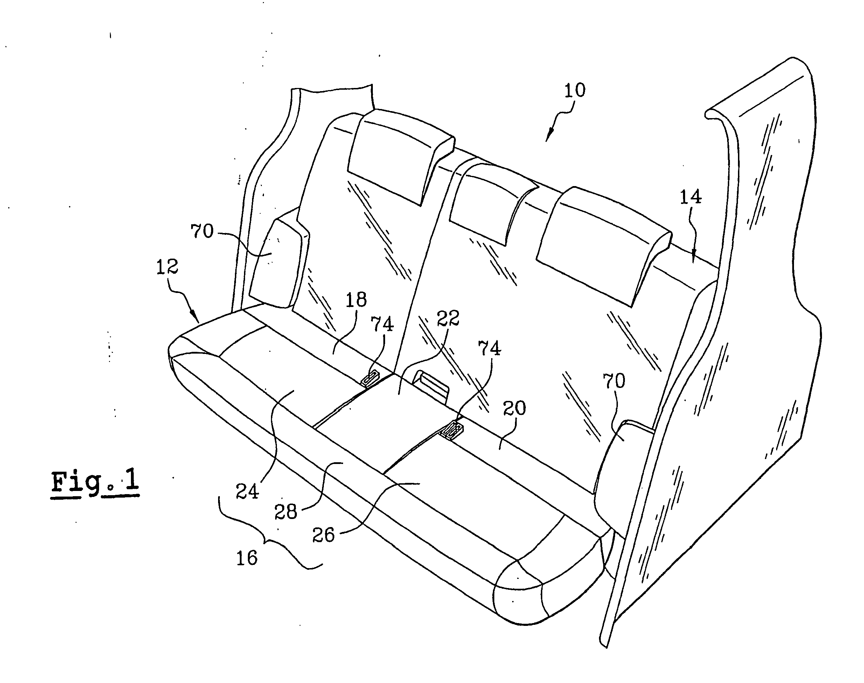

Sur les figures 1 à 3, on a représenté une banquette arrière 10 de véhicule automobile, réalisée conformément à l'invention. Plus précisément, les figures 1 à 3 représentent respectivement la banquette 10 en position avancée et dans une configuration "trois places", en position avancée et dans une configuration intermédiaire et en position reculée et dans une configuration "deux places".

De façon connue, la banquette 10 comprend une assise 12 et un dossier 14.

Le dossier 14 peut être réalisé de façon quelconque sans sortir du cadre de l'invention. Il peut notamment être réalisé d'un seul tenant ou en deux parties, comme représenté, avec ou sans appui-tête, etc ..

L'assise 12 comprend une ossature (non représentée), une partie principale 16 fixée à l'ossature, trois parties 18, 20 et 22 supportées de façon mobile par l'ossature et des moyens de commande permettant de déplacer ces parties mobiles 18, 20 et 22.

Le dossier 14 de la banquette 10 est supporté par l'ossature de l'assise 12.

L'ossature de l'assise 12 est montée sur le plancher du véhicule par l'intermédiaire de moyens (non représentés) permettant de commander un déplacement global de la banquette 10 vers l'avant ou vers l'arrière à l'intérieur de l'habitacle du véhicule. Ces moyens de commande de déplacement peuvent être constitués par tous moyens connus de l'homme du métier, sans sortir du cadre de l'invention.

La partie principale 16 de l'assise 12 est constituée de deux éléments latéraux 24 et 26, par exemple sensiblement rectangulaires en vue de dessus. Ces éléments peuvent être de mêmes dimensions et de même forme, comme représenté, ou de dimensions et/ou de formes différentes, sans sortir du cadre de l'invention. Les éléments latéraux 24 et 26 peuvent ainsi former des parties plus ou moins grandes de l'assise 12.

Chacun des éléments latéraux 24 et 26 de la partie principale 16 de l'assise 12 est fixé sur l'ossature de celle-ci par tout moyen approprié, connu de l'homme du métier.

Dans le mode de réalisation représenté, la partie principale 16 de l'assise 12 comprend également un élément de liaison 28 qui relie entre eux les éléments latéraux 24 et 26 et forme le bord avant de l'assise 12. Il est à noter que cet élément de liaison 28 est facultatif. Il peut donc être supprimé sans sortir du cadre de l'invention.

Les parties mobiles de l'assise 12 comprennent deux parties arrière 18 et 20, ainsi qu'une partie centrale 22.

Les parties arrière 18 et 20 sont placées respectivement derrière chacun des éléments latéraux 24 et 26 de la partie principale 16 de l'assise 12. Ces parties arrière 18 et 20 sont montées sur l'ossature de l'assise 12 de façon à pouvoir se déplacer selon une direction transversale par rapport à celle-ci.

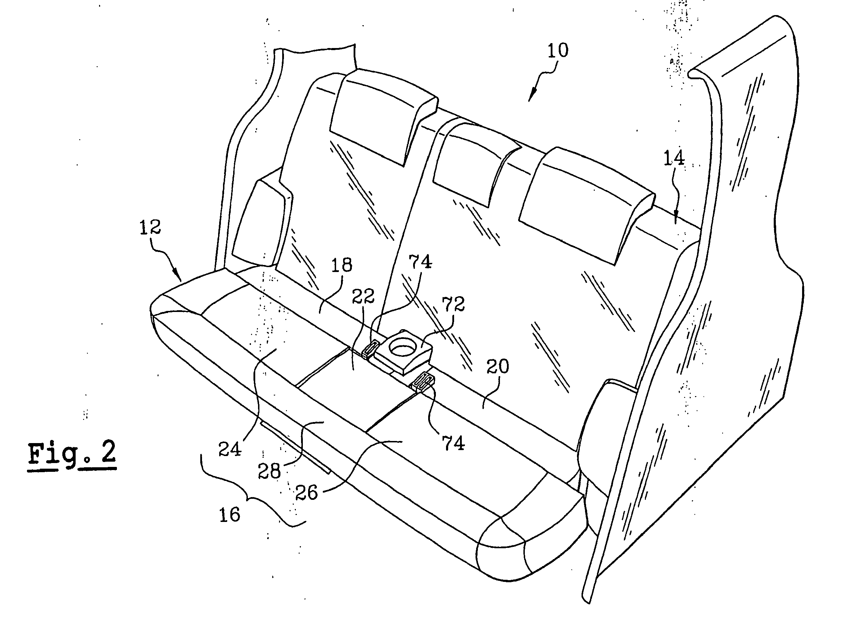

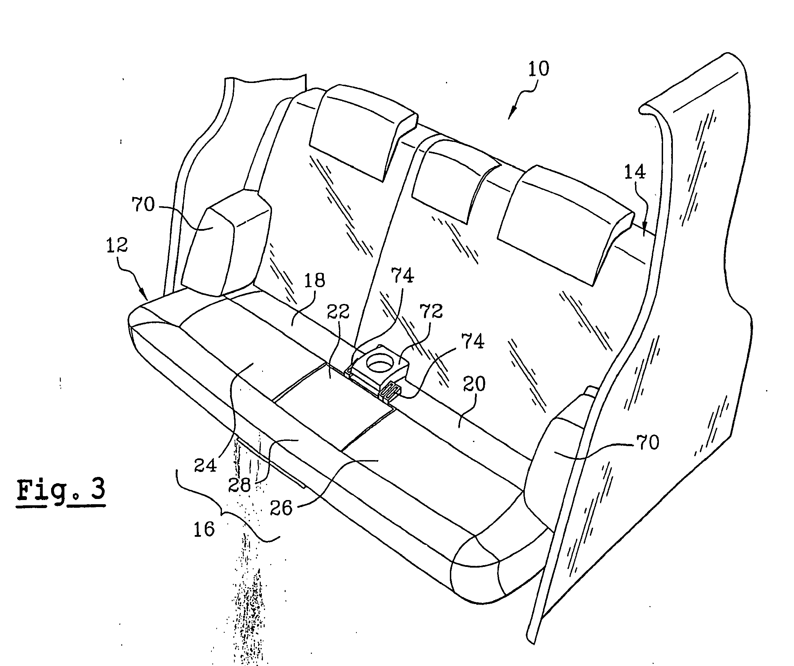

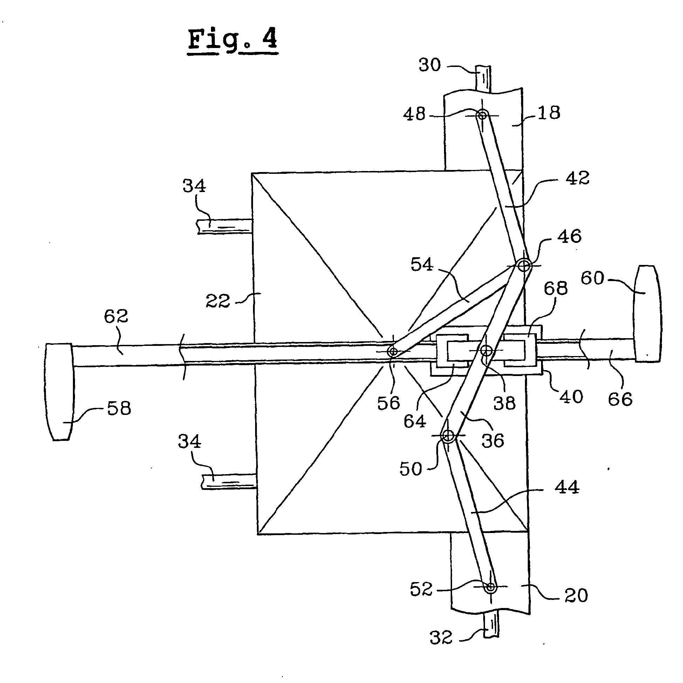

A cet effet, l'ossature de l'assise est munie de moyens de guidage tels que des tiges 30, 32 (figure 4) orientées selon une direction transversale et sur lesquelles coulisse chacune des parties arrière 18 et 20. Celles-ci peuvent ainsi se déplacer entre une position écartée, illustrée sur la figure 1, et une position rapprochée, illustrée sur la figure 3, en passant par des positions intermédiaires telles que celle qui est représentée sur la figure 2.

La partie centrale 22 est placée entre les éléments latéraux 24 et 26 de la partie principale 16 de l'assise 12. Cette partie centrale 22 est montée sur l'ossature de l'assise 12 de façon à pouvoir se déplacer selon une direction longitudinale par rapport à celle-ci, .c'est-à-dire d'avant en arrière.

A cet effet, l'ossature de l'assise est munie de moyens de guidage tels que des tiges 34 (figure 4) orientées selon une direction longitudinale et sur lesquelles coulisse la partie centrale 22. Celle-ci peut ainsi se déplacer entre une position arrière illustrée sur la figure 1 et une position avant illustrée sur la figure 3, en passant par des positions intermédiaires telles que celle qui est représentée sur la figure 2.

Les moyens de commande sont conçus de façon à commander à la fois le déplacement des deux parties arrière 18 et 20 et celui de la partie centrale 22 de l'assise 12 de la banquette 10, pour faire passer celle-ci de la configuration "trois places" illustrée sur la figure 1 à la configuration "deux places" illustrée sur la figure 3. A cet effet, les moyens de commande agissent simultanément sur les deux parties arrière 18 et 20 et sur la partie centrale 22 et font passer l'assise 12 de la banquette par une multiplicité de configurations intermédiaires prédéterminées dont l'une est illustrée à titre d'exemple sur la figure 2.

Les moyens de commande peuvent prendre différentes formes sans sortir du cadre de l'invention. Ainsi, ils peuvent être de nature mécanique ou électrique.

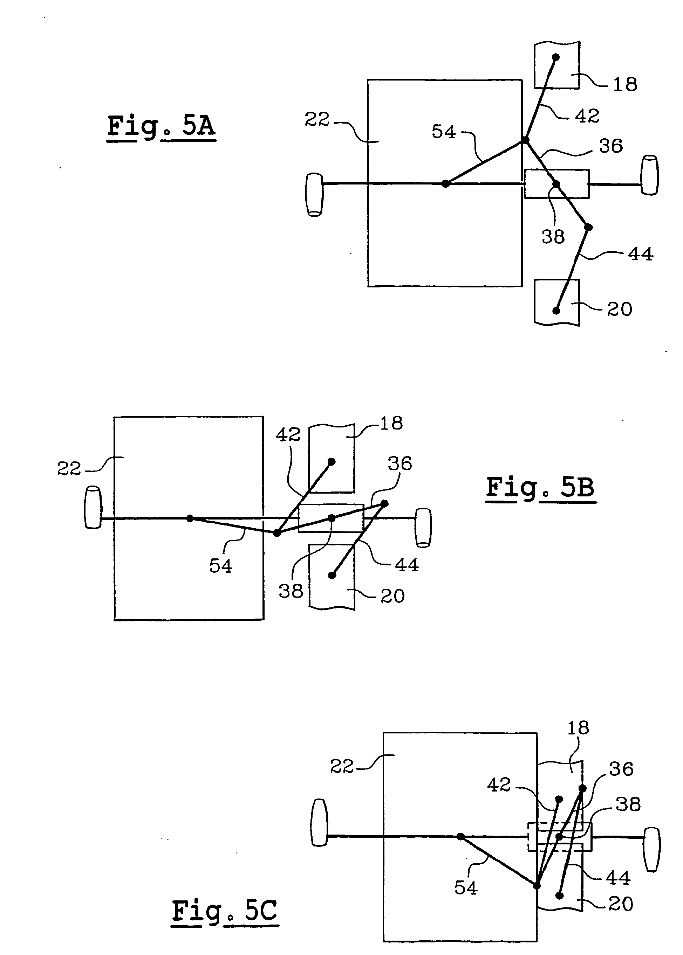

Un mode de réalisation de moyens de commande de nature mécanique va à présent être décrit à titre d'exemple en se référant aux figures 4 et 5A à 5C.

Comme l'illustre la figure 4, dans ce mode de réalisation les moyens de commande comprennent un palonnier 36, fixé à un axe vertical 38 monté tournant dans un boîtier 40 solidaire de l'ossature de l'assise 12 de la banquette 10. Le palonnier 36 comprend deux bras de levier horizontaux de même longueur.

Les moyens de commande comprennent de plus deux biellettes horizontales 42 et 44 de même longueur reliant le palonnier 36 respectivement à la partie arrière de droite 18 et à la partie arrière de gauche 20 de l'assise 12.

Plus précisément, une extrémité de la biellette de droite 42 est articulée à une première extrémité du palonnier 36 par un pivot vertical 46 et l'autre extrémité de la biellette de droite 42 est articulée sur la partie arrière de droite 18 par un pivot vertical 48. De façon comparable, une extrémité de la biellette de gauche 44 est articulée à la deuxième extrémité du palonnier 36 par un pivot vertical 50 et l'autre extrémité de la biellette de gauche 44 est articulée sur la partie arrière de gauche 20 par un pivot vertical 52.

Les moyens de commande comprennent également une troisième biellette horizontale 54 qui relie le palonnier 36 à la partie centrale 22 de l'assise 12 de la banquette 10.

De façon plus précise, une extrémité de la troisième biellette 54 est articulée sur la première extrémité du palonnier 36, avec la biellette de droite 42, par le pivot vertical 46. L'autre extrémité de la troisième biellette 54 est articulée sur la partie centrale 22 de l'assise 12 par un autre pivot vertical 56.

Dans le mode de réalisation représenté à titre d'exemple sur la figure 4, les moyens de commande comprennent un premier organe de manoeuvre 58 placé dans l'habitacle du véhicule et un deuxième organe de manoeuvre 60 placé dans le coffre arrière du véhicule. Plus précisément, les organes de manoeuvre 58 et 60 sont constitués par des poignées.

La poignée formant le premier organe de manoeuvre 58 est fixée à l'extrémité avant d'une tige 62 qui s'étend selon l'axe longitudinal du véhicule. La tige 62 est montée dans l'ossature de l'assise 12 de façon à pouvoir tourner librement autour de son axe tout en étant immobilisée en translation parallèlement à celui-ci. A son extrémité arrière, la tige 62 est en prise avec l'axe vertical 38 du palonnier 36, par l'intermédiaire d'un mécanisme tel que des pignons de renvoi 64.

De façon comparable, la poignée formant le deuxième organe de manoeuvre 60 est fixée à l'extrémité arrière d'une tige 66 qui s'étend selon l'axe longitudinal du véhicule. La tige 66 est montée dans l'ossature de l'assise 12 de façon à pouvoir tourner librement autour de son axe tout en étant immobilisée en translation parallèlement à celui-ci. A son extrémité avant, la tige 66 est en prise avec l'axe vertical 38 du palonnier 36, par l'intermédiaire d'un mécanisme tel que des pignons de renvoi 68.

Grâce à l'agencement qui vient d'être décrit, l'actionnement de l'une quelconque des poignées formant les organes de manoeuvre 58 et 60 a pour effet de faire tourner le palonnier 36 autour de son axe vertical 38 dans l'un ou l'autre sens. Il en résulte un déplacement conjoint des parties arrière 18 et 20 et de la partie centrale 22 de l'assise 12 de la banquette 10.

La figure 4 représente la configuration "trois places" de l'assise 12. Dans cette configuration, les parties arrière 18 et 20 sont écartées l'une de l'autre de façon à ménager entre elles un espace dont la largeur est égale à celle de la partie centrale 22. Celle-ci est alors reculée au maximum vers l'arrière de façon à remplir cet espace. La région arrière de l'assise comprend alors à la fois les parties arrière 18 et 20 et la partie centrale 22. La largeur transversale de l'assise est alors maximale.

Comme l'illustrent schématiquement les figures 5A à 5C, lorsqu'un utilisateur manoeuvre l'une ou l'autre des poignées formant les organes de manoeuvre 58 et 60 à partir de cette configuration "trois places", il commande une rotation du palonnier 36 dans un sens tel que celui-ci passe d'abord par une position dans laquelle il est orienté transversalement et les biellettes 42 et 44 sont alignées avec lui. Les parties arrière 18 et 20 sont alors écartées au maximum l'une de l'autre et la partie centrale 22 commence à se déplacer rapidement vers l'avant.

La poursuite de la manoeuvre de la poignée a pour effet de commencer à rapprocher les parties arrière 18 et 20 l'une de l'autre, tout en poursuivant le mouvement rapide vers l'avant de la partie centrale 22. Le rapprochement des parties arrière 18 et 20 est d'abord relativement lent et s'accélère progressivement. Ainsi, la partie centrale 22 a libéré l'espace formé entre les parties arrière 18 et 20 lorsque la largeur de cet espace devient inférieure à celle de la partie centrale (figure 5A).

La suite des mouvements commandés par la manoeuvre de la poignée se caractérise par le fait que la vitesse de déplacement des parties arrière 18 et 20 l'une vers l'autre s'accélère alors que le déplacement de la partie centrale 22 vers l'avant se ralentit (figure 5B).

Lorsque le palonnier 36 et la troisième biellette 54 sont alignés selon l'axe longitudinal du véhicule, le déplacement vers l'avant de la partie centrale 22 cesse. La partie centrale 22 est alors écartée des parties arrière 18 et 20.

Comme l'illustre notamment la figure 5C, la fin des mouvements commandés par la manoeuvre de la poignée est telle que les deux parties arrière 18 et 20. viennent finalement en appui l'une contre l'autre selon l'axe longitudinal du véhicule. Simultanément, la partie centrale se déplace lentement vers l'arrière pour venir finalement en appui contre le bord avant des parties arrière 18 et 20. L'assise de la banquette occupe alors sa configuration "deux places".

Comme l'illustre notamment la figure 3, dans la configuration "deux places" de l'assise de la banquette, les bords des parties arrière 18 et 20 tournés vers l'extérieur du véhicule sont séparés par une largeur transversale réduite, par rapport à la largeur transversale qui sépare ces bords dans la configuration trois places" (figure 1). Cette largeur transversale réduite est inférieure à la largeur transversale qui sépare les renflements 70 prévus à l'intérieur de l'habitacle pour le passage des roues du véhicule.

Par conséquent, la configuration "deux places" de l'assise de la banquette permet de reculer celle-ci entre lesdits renflements 70, pour disposer d'un écartement maximal entre les sièges, lorsque cela est nécessaire.

A l'inverse, lorsque la banquette est placée en avant des renflements 70 pour disposer d'un volume de coffre maximal, elle peut être amenée en configuration "trois places". Trois passagers peuvent alors être placés sur la banquette.

L'invention permet ainsi de disposer d'une modularité optimale aussi bien en ce qui concerne la largeur de l'assise de la banquette qu'en ce qui concerne l'espace disponible dans le coffre arrière du véhicule et pour les passagers.

Lorsque la partie principale 16 de l'assise 12 comprend un élément de liaison 28, comme on l'a représenté sur les figures 1 à 3, le déplacement vers l'avant de la partie centrale 22 de l'assise est tel que ladite partie centrale passe en dessous de cet élément de liaison 28.

Comme l'illustrent en particulier les figures 1 à 3, l'assise 12 de la banquette comprend des boucles 74 de ceintures de sécurité des places latérales et de la place centrale. Ces boucles sont situées le long des bords des éléments latéraux 24 et 26 de la banquette. Les boucles 74 se déplacent donc selon une direction transversale avec les éléments latéraux 24 et 26 lorsqu'on fait passer la banquette de sa configuration "deux places" à sa configuration "trois places" et inversement. A cet effet, les boucles 74 peuvent être ancrées, de façon coulissante, sur une tige transversale faisant partie intégrante de l'ossature.

Le changement de configuration de l'assise de la banquette obtenu par le déplacement conjoint des parties 18, 20 et 22 peut aussi s'accompagner de la mise en place ou de l'escamotage d'un ou plusieurs accessoires. Ainsi, comme l'illustrent à titre d'exemple non limitatif les figures 1 à 3, une console centrale porte gobelet 72 peut faire saillie au centre du dossier 14 dans la configuration "deux places" et être escamotée en configuration "trois places". Les moyens de commande sont alors pourvus d'organes complémentaires assurant le déplacement de la console 72 entre ces deux positions, lorsqu'ils sont actionnés.

Il est à noter que la console 72 vient avantageusement se placer au-dessus des boucles 74 prévues pour la ceinture de sécurité de la place centrale, afin de rendre ces boucles inaccessibles, lorsque la banquette occupe sa configuration "deux places" illustrée sur la figure 3.

## Revendications

1. Banquette de véhicule, comprenant une assise (12) et un dossier (14), dans laquelle l'assise (12) est apte à occuper une configuration "deux places" et une configuration « trois places », une région arrière de l'assise (12) présentant, dans la configuration "deux places", une largeur transversale réduite par rapport à celle qu'elle présente dans la configuration "trois places", la banquette (10) comprenant des moyens de commande aptes à modifier la configuration de l'assise (12), **caractérisée en ce que** l'assise (12) comporte une ossature, une partie principale (16) solidaire de l'ossature, deux parties arrière (18, 20) aptes à se déplacer selon une direction transversale par rapport à l'ossature et une partie centrale (22) apte à se déplacer d'avant en arrière par rapport à l'ossature, les moyens de commande étant aptes à déplacer conjointement la partie centrale (22) vers l'avant et les deux parties arrière (18, 20) l'une vers l'autre ou inversement.

2. Banquette de véhicule selon la revendication 1, dans laquelle la banquette (10) est une banquette arrière de véhicule.

3. Banquette de véhicule selon la revendication 2, dans laquelle les moyens de commande comprennent un premier organe de manoeuvre (58) placé dans un habitacle du véhicule et un deuxième organe de manoeuvre (60) placé dans un coffre arrière du véhicule.

4. Banquette de véhicule selon l'une quelconque des revendications 2 et 3, dans laquelle la banquette (10) est munie de moyens aptes à commander son déplacement global entre une position avant et une position arrière dans le véhicule, la position avant de la banquette étant telle que la région arrière de l'assise (12) est située en avant de renflements (70) de passage de roues du véhicule, de telle sorte que l'assise (12) peut occuper la configuration "trois places", et la position arrière de l'assise étant telle que la région arrière de l'assise (12) est située en face desdits renflements (70), de telle sorte que l'assise (12) ne peut occuper que la configuration "deux places".

5. Banquette de véhicule selon l'une quelconque des revendications précédentes, dans laquelle les moyens de commande sont de nature mécanique.

6. Banquette de véhicule selon la revendication 5, dans laquelle les moyens de commande comprennent un palonnier (36) articulé sur l'ossature de l'assise (12), de façon à agir simultanément sur les deux parties arrière (18, 20) de celle-ci, et au moins une biellette (54) reliant le palonnier (36) à la partie centrale (22) de l'assise (12).

7. Banquette de véhicule selon l'une quelconque des revendications précédentes, dans laquelle l'assise (12) comporte des boucles (74) de ceintures de sécurité, qui se déplacent selon une direction transversale lorsque l'assise passe de la configuration "deux places" à la configuration "trois places" et inversement.

8. Banquette de véhicule selon l'une quelconque des revendications précédentes, dans laquelle le passage de l'assise (12) de sa configuration "deux places" à sa configuration "trois places" s'accompagne de l'escamotage d'au moins un accessoire (72) et inversement.

9. Banquette de véhicule selon les revendications 7 et 8 combinées, dans laquelle l'accessoire (72) rend inaccessibles les boucles (74) de ceinture de sécurité d'une place centrale, lorsque l'assise est dans sa configuration "deux places".

## Claims

1. A vehicle bench seat comprising a squab (12) and a back (14), in which the squab (12) is capable of occupying a 'two seat' configuration and a 'three seat' configuration, a rear region of the squab (12) in the 'two seat' configuration being of a transverse width which is reduced with respect to that which it has in the 'three seat' configuration, the bench seat (10) comprising control means for modifying the configuration of the squab (12), **characterised in that** the squab (12) comprises a frame, a main portion (16) which is fixed with respect to the frame, two rear portions (18, 20) capable of being displaced in a transverse direction with respect to the frame and a central portion (22) capable of being displaced in a rearward direction with respect to the frame, the control means being capable of jointly displacing the central portion (22) forwardly and the two rear portions (18, 20) towards each other or vice-versa.

2. A vehicle bench seat according to claim 1 wherein the bench seat (10) is a vehicle rear bench seat.

3. A vehicle bench seat according to claim 2 wherein the control means comprise a first operating member (58) disposed in a passenger compartment of the vehicle and a second operating member (60) disposed in a rear boot of the vehicle.

4. A vehicle bench seat according to either one of claims 2 and 3 wherein the bench seat (10) is provided with means for controlling its overall displacement between a front position and a rear position in the vehicle, the front position of the bench seat being such that the rear region of the squab (12) is disposed in front of wheel arch bulges (70) of the vehicle in such a way that the squab (12) can occupy the 'three seat' configuration and the rear position of the squab being such that the rear region of the squab (12) is facing said bulges (70) so that the squab (12) can only occupy the 'two seat' configuration.

5. A vehicle bench seat according to any one of the preceding claims wherein the control means are mechanical in nature.

6. A vehicle bench seat according to claim 5 wherein the control means comprise a swing bar (36) pivotably mounted to the frame of the squab (12) in such a way as to act simultaneously on the two rear portions (18, 20) thereof, and at least one link (54) connecting the swing bar (36) to the central portion (22) of the squab (12).

7. A vehicle bench seat according to any one of the preceding claims wherein the squab (12) comprises safety belt buckles (74) which are displaced in a transverse direction when the squab moves from the 'two seat' configuration to the 'three seat' configuration and vice-versa.

8. A vehicle bench seat according to any one of the preceding claims wherein the movement of the squab (12) from its 'two seat' configuration to its 'three seat' configuration is accompanied by the retraction of at least one accessory (72) and vice-versa.

9. A vehicle bench seat according to claims 7 and 8 in combination wherein the accessory (72) renders the safety belt buckles (74) of a central seat inaccessible when the squab is in its 'two seat' configuration.

## Patentansprüche

1. Fahrzeugbank, aufweisend ein Sitzteil (12) und eine Rückenlehne (14), bei welcher das Sitzteil (12) fähig ist, eine "zwei Plätze"-Konfiguration und eine "drei Plätze"-Konfiguration einzunehmen, wobei ein hinterer Bereich des Sitzteils (12) in der "zwei Plätze"-Konfiguration eine reduzierte transversale Breite im Verhältnis zu derjenigen aufweist, die es in der "drei Plätze"-Konfiguration aufweist, wobei die Bank (10) Steuermittel umfasst, die fähig sind, die Konfiguration des Sitzteils (12) zu verändern, **dadurch gekennzeichnet, dass** das Sitzteil (12) eine Tragekonstruktion aufweist, einen Hauptteil (16), der fest mit der Tragekonstruktion verbunden ist, zwei hintere Teile (18, 20), die fähig sind, gemäß einer transversalen Richtung im Verhältnis zur Tragekonstruktion verschoben zu werden, und einen Hauptteil (22), der fähig ist, von vorne nach hinten im Verhältnis zur Tragekonstruktion verschoben zu werden, wobei die Steuermittel fähig sind, gemeinsam den zentralen Teil (22) in Richtung nach vorne und die zwei hinteren Teile (18,20), das eine in Richtung zum anderen oder umgekehrt, zu verschieben.

2. Fahrzeugbank nach Anspruch 1, bei welcher die Bank (10) eine hintere Bank des Fahrzeugs ist.

3. Fahrzeugbank nach Anspruch 2, bei welcher die Steuermittel ein erstes Betätigungsbauteil (58), das in einer Fahrgastzelle des Fahrzeugs angeordnet ist, und ein zweites Betätigungsbauteil (60), das in einem hinteren Kofferraum des Fahrzeugs angeordnet ist, aufweisen.

4. Fahrzeugbank nach irgendeinem der Ansprüche 2 und 3, bei welcher die Bank (10) mit Mitteln ausgestattet ist, die fähig sind, ihre gesamte Verschiebung zwischen einer vorderen Stellung und einer hinteren Stellung in dem Fahrzeug zu steuern, wobei die vordere Stellung der Bank derart ist, dass der hintere Bereich des Sitzteils (12) vor Ausbauchungen (70) für den Durchgang von Rädern des Fahrzeugs derart angeordnet ist, dass das Sitzteil (12) die "drei Platze"-Konfiguration einnehmen kann, und wobei die hintere Stellung des Sitzteils derart ist, dass der hintere Bereich des Sitzteils (12) gegenüber von den Ausbauchungen (70) derart angeordnet ist, dass das Sitzteil (12) nur die "zwei Plätze"-Konfiguration einnehmen kann.

5. Fahrzeugbank nach irgendeinem der vorangegangenen Ansprüche, bei welcher die Steuermittel von einer mechanischen Art sind.

6. Fahrzeugbank nach Anspruch 5, bei welcher die Steuermittel einen Steuerhebel (36) ausweisen, der an der Tragekonstruktion des Sitzteils (12) angelenkt ist, um gleichzeitig auf die zwei hinteren Teile (18, 20) von dieser einzuwirken, und mindestens einen Schwingarm (54), welcher den Steuerhebel. (36) mit dem zentralen Teil (22) des Sitzteils (12) verbindet.

7. Fahrzeugbank nach irgendeinem der vorangegangenen Ansprüche; bei welcher das Sitzteil (12) Schnallen (74) von Sicherheitsgurten aufweist, die gemäß einer transversalen Richtung verschoben werden, wenn das Sitzteil von der "zwei Plätze"-Konfiguration zu der "drei Plätze"-Konfiguration übergeht und umgekehrt.

8. Fahrzeugbank nach irgendeinem der vorangegangenen Ansprüche, bei welcher der Übergang des Sitzteils (12) von seiner "zwei Plätze"-Konfiguration in seine "drei Plätze"-Konfiguration von dem Einziehen mindestens eines Zusatzbauteils (72) begleitet wird und umgekchrt.

9. Fahrzeugbank nach Anspruch 7 und 8 in Kombination, bei welcher das Zusatzbauteil (72) die Schnallen (74) des Sicherheitsgurts eines mittleren Platzes unzugänglich macht, wenn das Sitzteil in seiner "zwei Plätze"-Konfiguration ist.
